(19) Europäisches Patentamt
European Patent Office
Office européen des brevets

(11)  EP 3 001 141 B1

(12)  **EUROPEAN PATENT SPECIFICATION**

(45) Date of publication and mention
of the grant of the patent:
**10.10.2018  Bulletin 2018/41**

(51) Int Cl.:
***G01B 11/24*** *(2006.01)*      ***G06T 7/00*** *(2017.01)*
***G06K 9/62*** *(2006.01)*

(21) Application number: **15181808.5**

(22) Date of filing: **20.08.2015**

(54) **INFORMATION PROCESSING SYSTEM AND INFORMATION PROCESSING METHOD**

INFORMATIONSVERARBEITUNGSSYSTEM UND
INFORMATIONSVERARBEITUNGSVERFAHREN

SYSTÈME DE TRAITEMENT D'INFORMATIONS ET PROCÉDÉ DE TRAITEMENT
D'INFORMATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **17.09.2014   JP 2014188555**

(43) Date of publication of application:
**30.03.2016   Bulletin 2016/13**

(73) Proprietor: **Ricoh Company, Ltd.**
**Tokyo 143-8555 (JP)**

(72) Inventor: **SEKIGUCHI, Hiroyoshi**
**Ohta-ku Tokyo 143-8555 (JP)**

(74) Representative: **J A Kemp**
**14 South Square**
**Gray's Inn**
**London WC1R 5JJ (GB)**

(56) References cited:
**DE-B3-102010 038 177      US-A1- 2004 155 877**
**US-A1- 2004 202 364      US-A1- 2008 075 324**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The disclosures herein generally relate to an information processing system, and an information processing method.

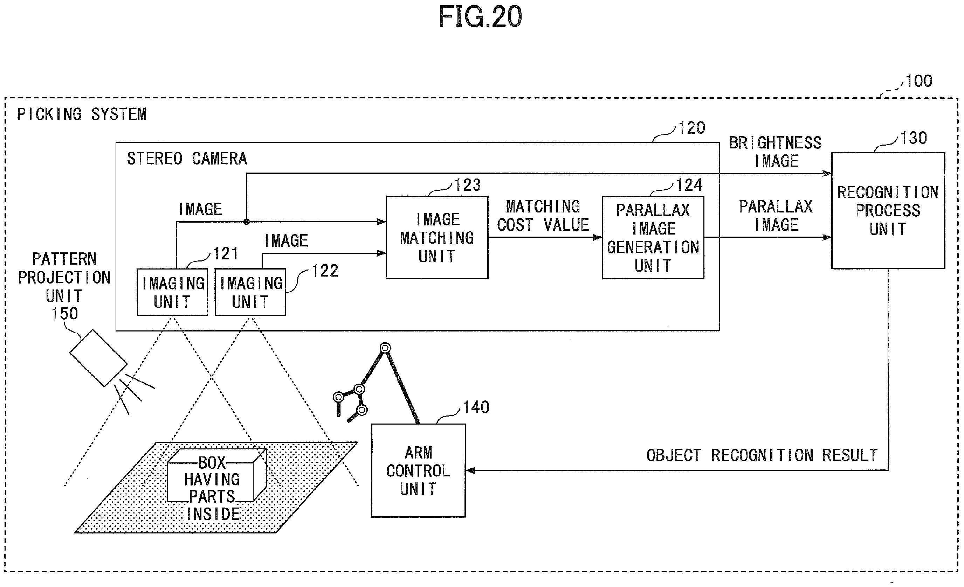

Conventionally, a picking system 100 has been known that is used for, for example, picking parts in a factory, by capturing multiple images of a part having few textures to calculate the parallax, and by applying an object recognition process to the part by using the parallax (see FIG. 20). Here, "textures" mean patterns, markings, colors, dots, and the like, that may appear on an image, for example, due to the brightness and darkness of the pixels.

For example, as illustrated in the picking system 100 in FIG. 20, a system has been known that obtains image data by imaging units 121 and 122 in a stereo camera 120, finds pixels matching with each other in two images by an image matching unit 123, and calculates the parallax of the matching pixels by a parallax image generation unit 124. Also, a recognition process unit 130 recognizes a part, based on a brightness image and a parallax image. An arm control unit 140 controls driving an arm to pick a part recognized based on a recognition result of the part.

Here, if an image captured by the imaging unit 121 is taken as a reference image, an image captured by the imaging unit 122 is taken as a comparison image, and matching is executed between a predetermined pixel in the reference image, with a pixel searched for in the comparison image having few textures in surrounding pixels, a series of analogous pixels may be obtained. Therefore, it is difficult to match corresponding pixels with each other, and a desired parallax (referred to as the "correct parallax", below) is hardly obtained.

Thereupon, a technology has been disclosed that improves calculation precision of the parallax by projecting various patterns on an object by a pattern projection unit 150 illustrated in FIG. 20, to execute matching between images having the various patterns projected. A technology relating to this is disclosed, for example, in Patent Document 1 (Japanese Laid-open Patent Publication No. 2013-190394).

However, if the pattern projection unit 150 illustrated in FIG. 20 is not installed at an appropriate position, reflected light may be captured in an image (see FIG. 21), which may affect information recognition precision (see FIG. 22).

US 2004/0155877 A1 discloses a system comprising a printed photographic mat, a camera and image processing apparatus for producing a three-dimensional computer model of a subject object.

US 2008/0075324 A1 discloses a camera, light emitting markers arranged in a matrix on a reference panel and a three-dimensional measuring instrument which calculates a three-dimensional shape of an object by processing.

It is a general object of at least one embodiment of the present invention to prevent the information recognition precision from being reduced.

## SUMMARY OF THE INVENTION

According to the present invention there is provided an information processing system and method as specified in the claims.

It is possible to prevent the information recognition precision from being reduced.

## BRIEF DESCRIPTION OF THE DRAWINGS

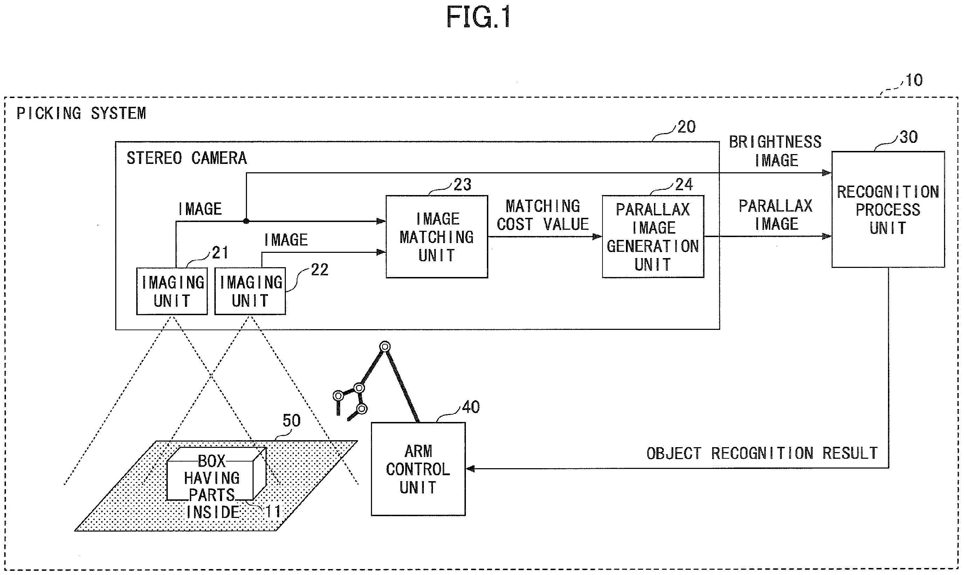

FIG. 1 is a basic configuration diagram of a picking system that is an information processing apparatus according to an embodiment of the present invention;

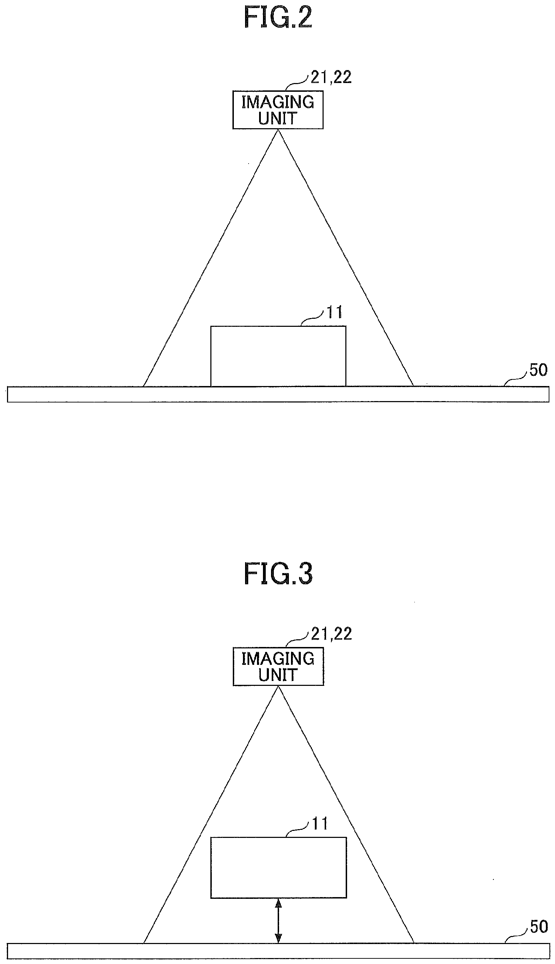

FIG. 2 is a diagram that illustrates an example in which a part is directly placed on a pattern unit;

FIG. 3 is a diagram that illustrates an example in which a pattern unit does not support a part;

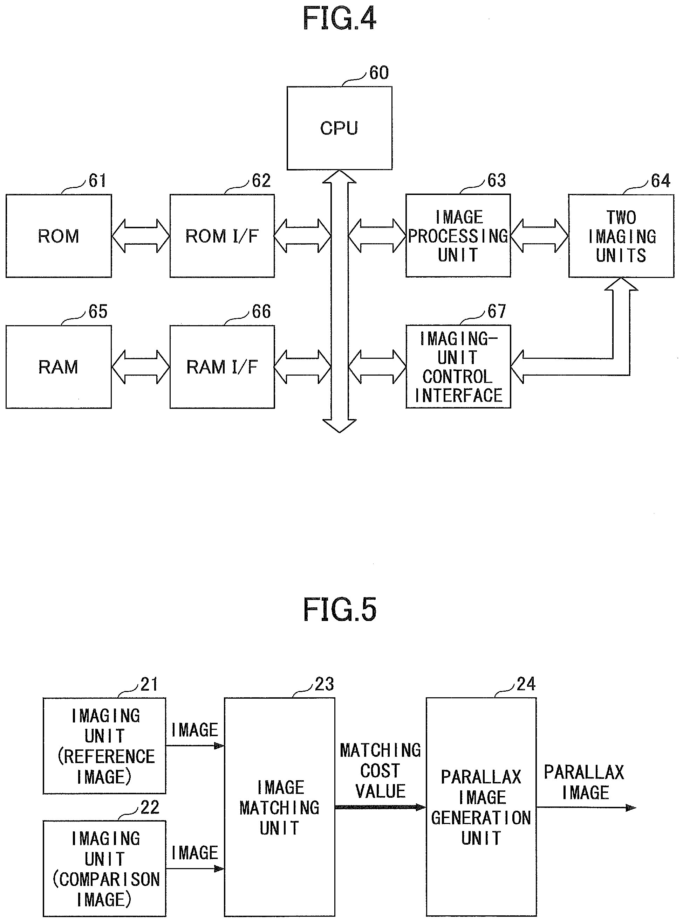

FIG. 4 is a hardware configuration diagram of a stereo camera according to an embodiment of the present invention;

FIG. 5 is a process configuration diagram of a stereo camera according to an embodiment of the present invention;

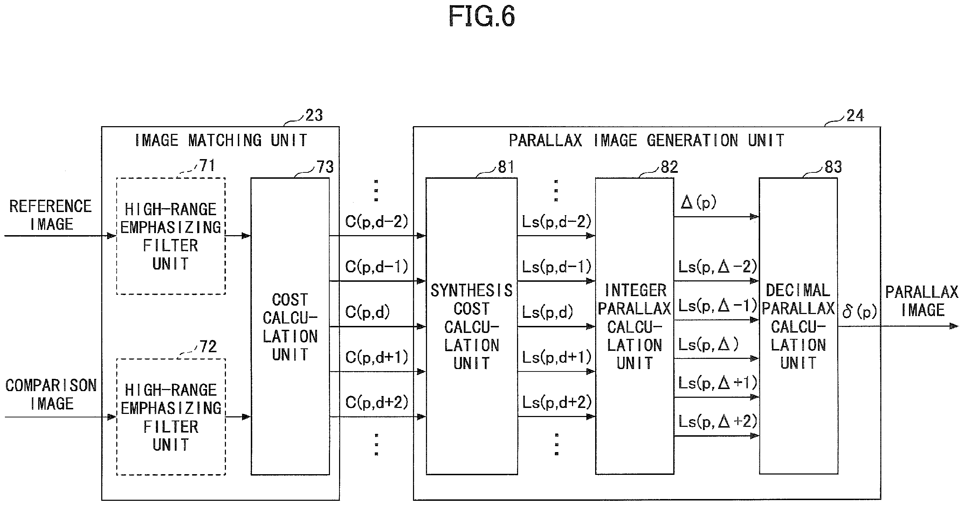

FIG. 6 is a process configuration diagram of an image matching unit and a parallax image generation unit;

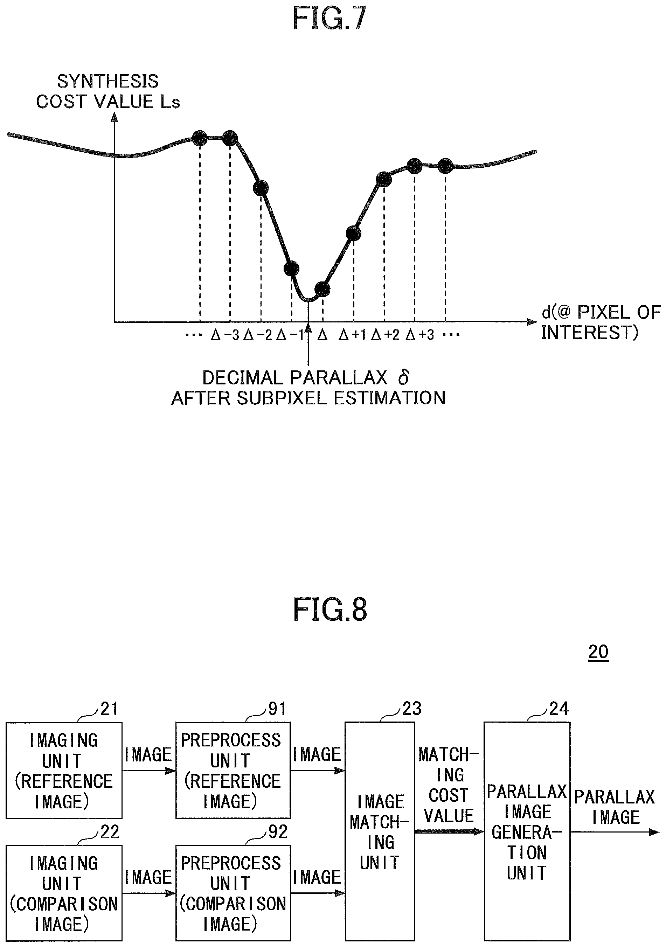

FIG. 7 is a schematic view that illustrates calculation of a decimal parallax by a decimal parallax calculation unit;

FIG. 8 is a process configuration diagram of a stereo camera having a preprocess unit;

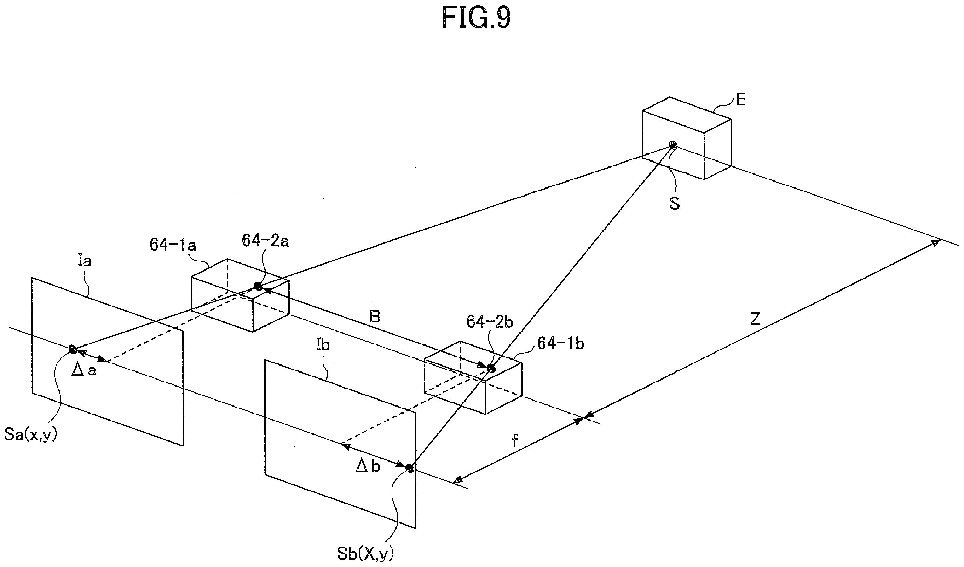

FIG. 9 is a schematic view that illustrates a principle of measurement of distance used in an embodiment of the present embodiment;

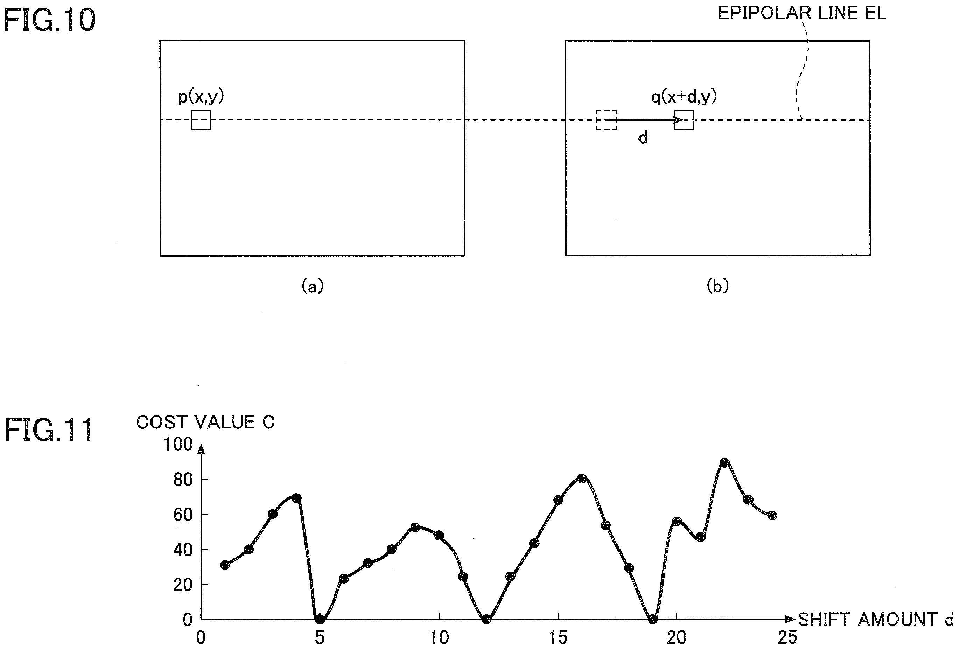

FIG. 10 is a conceptual diagram that illustrates calculation of a shift amount according to an embodiment of the present invention;

FIG. 11 is a graph that illustrates cost values with respect to shift amounts;

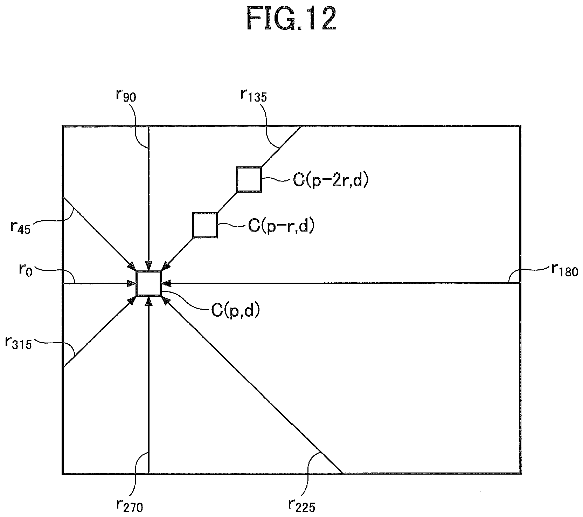

FIG. 12 is a schematic view that illustrates calculation of a synthesis cost value according to an embodiment of the present invention;

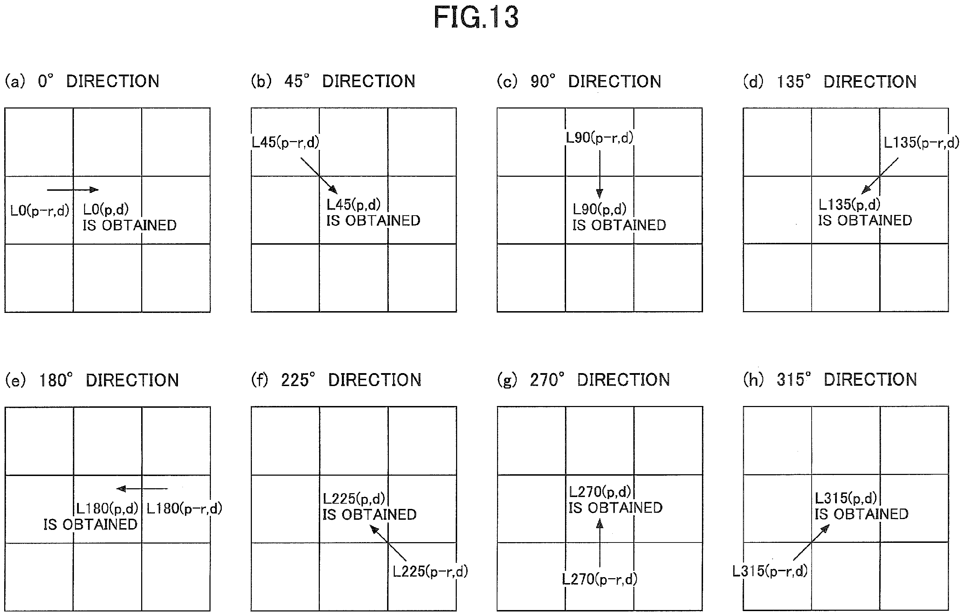

FIG. 13 is a diagram that illustrates an example in which path cost values Lr are aggregated where the paths come in eight directions;

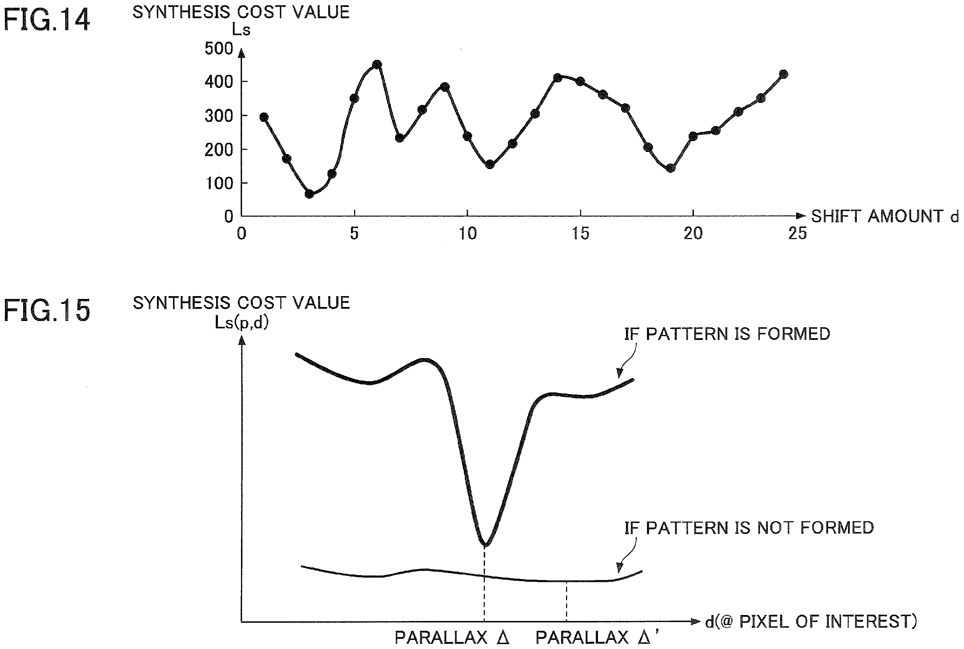

FIG. 14 is a graph that illustrates synthesis cost values with respect to parallax values according to an embodiment of the present invention;

FIG. 15 is a graph that compares synthesis cost values obtained with and without a pattern;

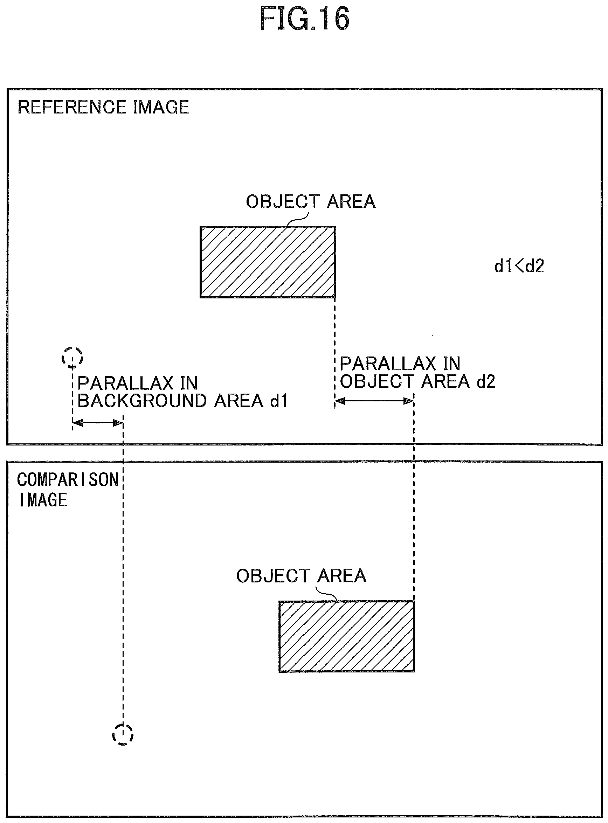

FIG. 16 is a schematic view that illustrates an object parallax and a background parallax according to an embodiment of the present invention;

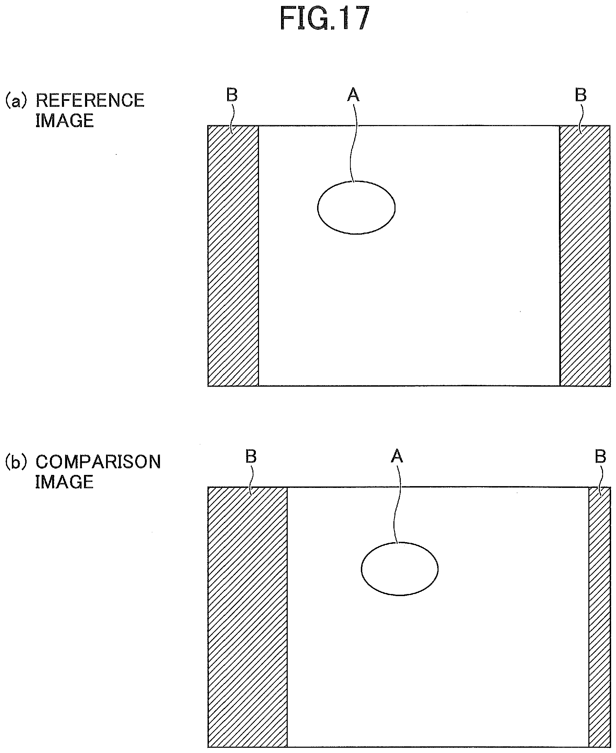

FIG. 17 is a diagram that illustrates positions of a pattern formed on a pattern unit;

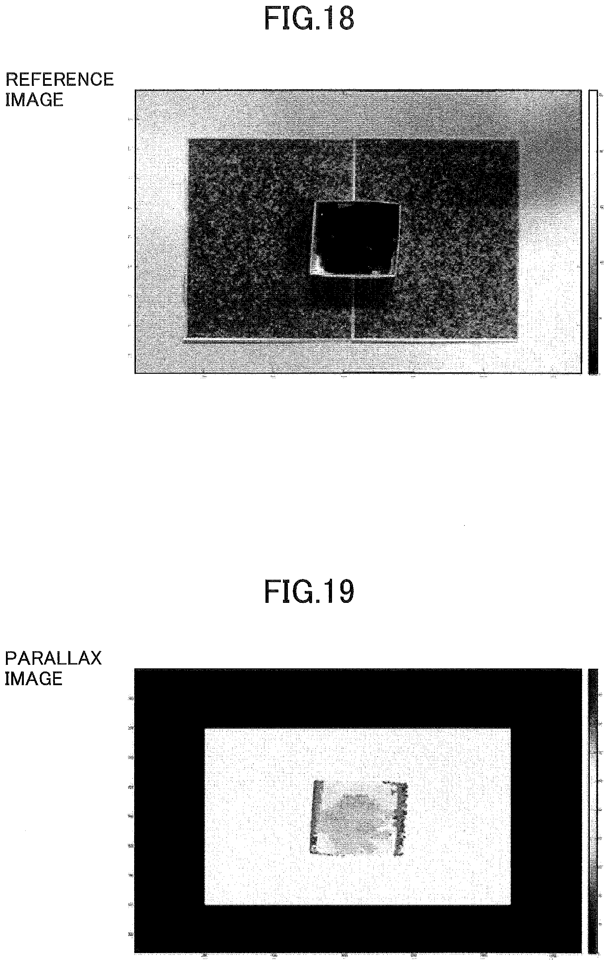

FIG. 18 is an example of a reference image to be captured by a picking system according to an embodiment of the present invention;

FIG. 19 is an example of a parallax image obtained by forming a pattern according to an embodiment of the present invention;

FIG. 20 is a basic configuration diagram of a conventional picking system that uses a pattern projection unit;

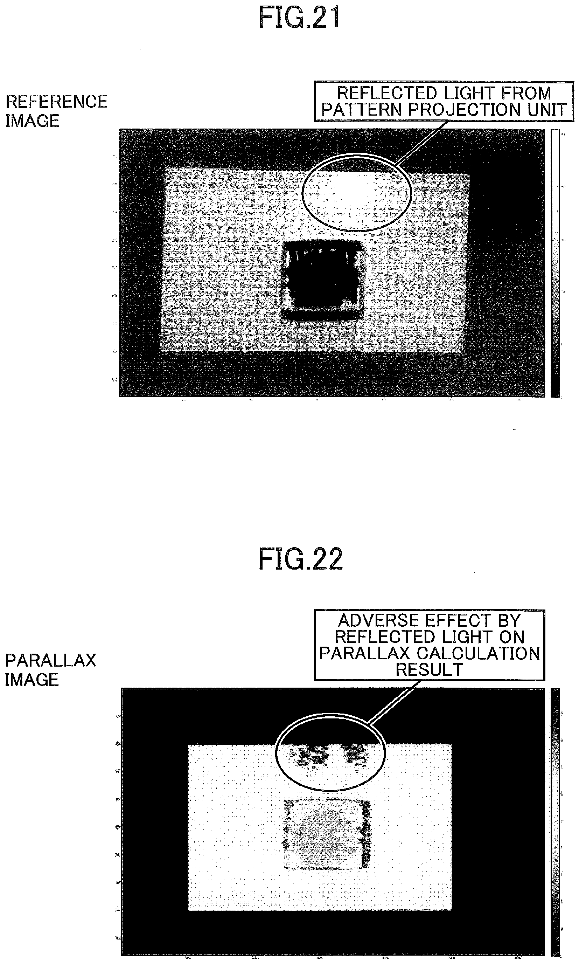

FIG. 21 is an example of a reference image captured by the conventional system in FIG. 20; and

FIG. 22 is an example of a parallax image obtained by projecting a pattern with respect to the reference image in FIG. 21.

## DESCRIPTION OF THE PREFERRED EMBODIMENTS

In the following, embodiments of the present invention will be described with reference to the drawings. The present invention is not limited to the embodiments. In the drawings, the same or corresponding parts are assigned the same codes, and duplicated description may be simplified or omitted appropriately.

In the embodiments of the present invention, for example, various patterns are formed outside of an object area, a matching process is applied to two images captured by, for example, a stereo camera that include an object and a pattern, and an SGM (Semi Global Matching) algorithm is adopted. Instead of projecting a predetermined pattern on a part by the pattern projection unit illustrated in FIG. 20 described above, a parallax image is obtained with respect to two images that include an object and a pattern by using, for example, an SGM algorithm.

An information processing system will be described according to an embodiment of the present invention with reference to FIG. 1, by taking a picking system 10 as an example that includes, for example, a stereo camera having an information processing function. Note that the information processing system in the present embodiment can be used not only in a picking system, but also, for example, in a technological field that adopts a stereo camera to obtain an ideal parallax image.

Also, in the present embodiment, although a configuration will be described in which the stereo camera has, for example, an information processing function, it is not limited to that. For example, a stereo camera may have a minimum configuration including an imaging unit to capture an image, and, for example, the information processing function may be included in an information processing apparatus such as a personal computer that is physically separated from the stereo camera.

<Basic configuration of picking system>

An overview of the picking system 10 will be described according to the present embodiment with reference to FIG. 1. FIG. 1 is a basic configuration diagram of the picking system 10 that is an information processing apparatus according to the present embodiment. The picking system 10 illustrated in FIG. 1 includes a stereo camera 20, a recognition process unit 30, an arm control unit 40, and a pattern unit 50.

The stereo camera 20 that captures an image of a box 11 having a part(s) inside (referred to as the "part(s)") as an example of an object, includes imaging units 21 and 22, an image matching unit 23, and a parallax image generation unit 24. Note that the number of imaging units is not restricted to two, but may be three or more. Here, by taking pictures of an object to be captured (for example, the part 11 illustrated in FIG. 1) in different directions at the same time, the stereo camera 20 can record information in the depth direction.

The image matching unit 23 calculates a cost value that represents, for example, non-similarity of a brightness value of each pixel in images (captured images) captured by the imaging units 21 and 22. Details of calculation of the cost value will be described later.

For example, based on two captured images, the parallax image generation unit 24 generates a parallax image that corresponds to every pixel at least in the image area of the part 11, which is the captured object. Details of generation of the parallax image will be described later.

The recognition process unit 30 recognizes the part 11 based on a comparison between, for example, brightness images obtained by the imaging units 21 and 22, and the parallax image generated by the parallax image generation unit 24.

The arm control unit 40 controls driving the arm to pick the part 11 based on a recognition result by the recognition process unit 30.

The pattern unit 50 has a predetermined pattern formed by a surface treatment. Alternatively, the pattern unit 50 may have a function to display the predetermined pattern. The pattern unit 50 is, for example, a panel or a stand to have the part 11 placed (positioned). FIG. 2 is a diagram that illustrates an example in which the part 11 is directly placed on the pattern unit 50. As illustrated in FIG. 2, the part 11 may be directly placed on the pattern unit 50, but it is not limited to that. FIG. 3 is a diagram that illustrates an example in which the pattern unit 50 does not support the part 11. As illustrated in FIG. 3, a predetermined space may be provided between the part 11 and the pattern unit 50 to place the part 11 at a position having the pattern unit 50 as the background. In this way, the pattern unit 50 does not necessarily support the part 11.

On the pattern unit 50, various patterns may be formed, for example, on an area outside (for example, the background area) of an area where the part 11 is placed (the object area). The various patterns may be printed (marked) as patterns, for example, having multiple values of brightness of black and white on the pattern unit 50 by the surface treatment, or may be formed by processing the surface of the pattern unit 50 to exhibit patterns having concavities and convexities. Note that the pattern unit 50 may have a sheet or a panel placed, on which patterns are printed (marked), on an area distant from the part 11. Also, a transparent member or the like may be placed on the pattern unit 50 having patterns formed by the surface treatment.

Also, the pattern unit 50 may have a function to display an image corresponding to the various patterns, and has, for example, a display unit such as an LCD display (panel).

In the images captured by the imaging units 21 and 22 illustrated in FIG. 2 and FIG. 3 described above, for example, the part 11 as an object does not overlap with, for example, the patterns on the pattern unit 50.

In the present embodiment, although a configuration using the stereo camera 20 is described, a monocular camera may be used instead of the stereo camera 20. In this case, the monocular camera is moved multiple times to capture images of the part 11 as an object, with which measurement of the distance is executed. In the following embodiments, although the stereo camera 20 is used for description, it is possible to use a monocular camera as described above.

<Hardware configuration of stereo camera 20>

Next, an example of a hardware configuration of the stereo camera 20 will be described according to the present embodiment with reference FIG. 4. FIG. 4 is a hardware configuration diagram of the stereo camera 20 according to the present embodiment.

The stereo camera 20 illustrated in FIG. 4 includes a CPU (Central Processing Unit) 60, a ROM (Read-Only Memory) 61, a ROM I/F 62, and an image processing unit 63. Also, the stereo camera 20 includes two imaging units 64, a RAM (Random Access Memory) 65, a RAM I/F 66, and an imaging-unit control interface I/F 67.

The CPU 60 has a control function to control information processing as a whole in the present embodiment. The ROM 61 stores, for example, an information processing program in the present embodiment. The ROM I/F 62 is an interface to connect the ROM 61 with the other functional units including the CPU 60. The image processing unit 63 executes a generation process of a parallax image and the like in the present embodiment.

The two imaging units 64 correspond to, for example, the imaging units 21 and 22 illustrated in FIG. 1. The two imaging units 64 are fixed, for example, at positions separated by a predetermined distance on a fixture, to capture images of an object, respectively. Note that the two imaging units 64 may be a single imaging unit having the imaging units 21 and 22 integrated. The two imaging units 64 convert optical images into analog signals, and further convert them into digital signals, to output image data. The image data may have, for example, eight bits/pixel, to obtain, for example, gradation levels of 0 to 255 (brightness values) preferably.

The RAM 65 functions as, for example, a buffer or a cache memory that stores a captured image input from the two imaging units 64 via the imaging-unit control interface I/F 67 and the like.

<Process configuration of stereo camera 20>

Next, functional blocks of the information processing apparatus will be described according to the present embodiment with reference to FIG. 5. FIG. 5 is a process configuration diagram of the stereo camera according to the present embodiment. Note that description is omitted for elements that have already described with reference to FIG. 1.

Basic process steps in the functional blocks will be described. As illustrated in FIG. 5, the imaging units 21 and 22 capture images of the part 11 as an object. The image matching unit 23 executes matching between the images captured by the imaging units 21 and 22, and calculates a cost value C(p,d) that represents non-similarity of a brightness value for each pixel.

The parallax image generation unit 24 aggregates the cost values C, or matching cost values C obtained by the image matching unit 23, for example, by an SGM algorithm. Also, the parallax image generation unit 24 calculates a synthesis cost value Ls(p,d) that is the sum of path cost values Lr(p,d) in directions for each parallax, calculates an integer parallax and a decimal parallax, generates a parallax image from the calculation result, and outputs the parallax image.

<Process configuration of image matching unit 23 and parallax image generation unit 24>

Next, details of the image matching unit 23 and the parallax image generation unit 24 will be described with reference to FIG. 6. FIG. 6 is a process configuration diagram of the image matching unit 23 and the parallax image generation unit 24. As illustrated in FIG. 6, the image matching unit 23 includes high-range emphasizing filter units 71 and 72, and a cost calculation unit 73. The parallax image generation unit 24 includes a synthesis cost calculation unit 81, an integer parallax calculation unit 82, and a decimal parallax calculation unit 83.

A calculation method of a cost value C calculated by the image matching unit 23 may be selected among calculation methods of, for example, SAD (Sum of Absolute Difference), SSD (Sum of Squared Difference), NCC (Normalized Cross-Correlation), and the like. Contents of processing by the synthesis cost calculation unit 81 and the integer parallax calculation unit 82 will be described in detail later.

The decimal parallax calculation unit 83 calculates a decimal parallax as illustrated in FIG. 7 by using a subpixel estimation method if the parallax needs to be calculated by decimal. FIG. 7 is a schematic view that illustrates calculation of decimal parallax by the decimal parallax calculation unit 83. For example, in a conformal line method, a decimal parallax $\delta$ may be calculated by using three synthesis cost values Ls that correspond to parallaxes "$\Delta$-1", "$\Delta$", and "$\Delta$+1" as illustrated in FIG. 7.

Also, in a parabola fitting method or an approximation method by polynomial, a decimal parallax $\delta$ may be calculated by using three synthesis cost values Ls. Furthermore, in the methods described above, a decimal parallax $\delta$ may be calculated by using five synthesis cost values Ls that correspond to parallaxes "$\Delta$-2", "$\Delta$-1", "$\Delta$", "$\Delta$+1", and "$\Delta$+2". Also, instead of using a conformal line method, a parabola fitting method, and an approximation method by polynomial, any desired subpixel estimation method may be used to calculate a decimal parallax $\delta$.

<Process configuration of stereo camera having preprocess unit>

Also, as illustrated in FIG. 8, preprocess units may be provided that execute a process on images obtained by the imaging units 21 and 22. FIG. 8 is a process configuration diagram of the stereo camera 20 having preprocess units 91 and 92. The preprocess units 91 and 92 illustrated in FIG. 8 apply processes of distortion correction, gamma correction, and the like to images. For example, when calculating a parallax, distortion states of a reference image and a comparison image may considerably affect a result of a cost value C calculated by the image matching unit 23, and the influence may also affect the parallax image generation unit 24. Therefore, it is desirable to exclude the influence described above as much as possible before inputting images into the image matching unit 23.

For example, if shifts of optical axes between a lens and a sensor, or different optical distortion states of lenses between the reference image and the comparison image occur, the preprocess units 91 and 92 may have units that hold correction parameters to correct the distortion and the like, and have calibration results reflected in the correction parameters.

The process steps in the blocks described above can be implemented by the hardware configuration in FIG. 4 described above. For example, the process functions of the image matching unit 23, the parallax image generation unit 24, and the preprocess units 91 and 92 can be implemented by the RAM 65 and the image processing unit 63.

<Principle of measurement of distance>

A principle of measurement of distance used in the present embodiment will be described according to the present embodiment with reference to FIG. 9. FIG. 9 is a schematic view that illustrates a principle of measurement of distance used in the present embodiment. Here, a principle will be described, for example, that derives a parallax of an object by a stereo camera, and measures the distance from the stereo camera to the object by the parallax value representing the parallax. In the following, to simplify the description, it will be described by units of pixels, not by a predetermined area.

<Calculation of parallax value>

First, an imaging device 64-1a and an imaging device 64-1b capture images, which will be referred to as a reference image Ia and a comparison image Ib, respectively, below. Note that in the example in FIG. 9, the imaging device 64-1a and the imaging device 64-1b are assumed to be disposed in parallel and equidistant. In the example in FIG. 9, a point S on an object E in the three dimensional space is mapped onto positions on the same horizontal line through the imaging device 64-1a and the imaging device 64-1b.

Namely, images of the point S are captured at a point Sa(x,y) in the reference image la, and at a point Sb(x,y) in the comparison image Ib, respectively. In this case, using Sa(x,y) in the coordinates of the imaging device 64-1a, and Sb(x,y) in the coordinates of imaging device 64-1b, the parallax value $\Delta$ is represented by the following formula.

$$\Delta = X - x \quad [\text{Formula 1}]$$

As illustrated in FIG. 9, representing the distance between the point Sa(x,y) in the reference image la, and a cross point of the perpendicular drawn from the imaging surface of the imaging lens 64-2a, by $\Delta$a, and representing the distance between the point Sb(x,y) in the comparison image Ib, and a cross point of the perpendicular drawn from the imaging surface of the imaging lens 64-2b, by $\Delta$b, the parallax value $\Delta$ is represented by $\Delta=\Delta a+\Delta b$.

<Distance calculation>

Also, by using the parallax value $\Delta$, the distance Z can be derived between the imaging devices 64-1a and 64-1b, and the object E. Specifically, the distance Z is a distance from a plane that includes the focal position of the imaging lens 64-2a and the focal position of the imaging lens 64-2b, to the specific point S on the object E.

As illustrated in FIG. 9, by using the focal length f of the imaging lens 64-2a and the imaging lens 64-2b, the base line length B that is a length between the imaging lens 64-2a and the imaging lens 64-2b, and the parallax value $\Delta$, the distance Z can be calculated by the following formula.

$$Z = (B \times f)/\Delta \quad [\text{Formula 2}]$$

As represented by Formula 2 above, the distance Z is less when the parallax value $\Delta$ is greater, and the distance Z is greater when the parallax value $\Delta$ is less.

<SGM method>

Next, a method of measuring a distance will be described that adopts an SGM method according to the present embodiment with reference to FIG. 10 to FIG. 15. An SGM method is a method that is adopted to derive the parallax value described above appropriately for an object having few textures. By representing detailed information of an object having few textures, it is possible to measure the distance more precisely.

Also, such an SGM method does not calculate a parallax value immediately after having calculated a cost value representing non-similarity, but calculates a synthesis cost value representing synthesis non-similarity after having calculated the cost value, to derive the parallax value, and eventually, to derive a parallax image representing the parallax values of all pixels. Note that although an SGM method is adopted in the present embodiment, it is not restricted to that, but any method may be adopted as long as it derives the parallax values of all pixels eventually, for example, based on a calculation result of cost values of surrounding pixels.

<Calculation of cost value>

First, a calculation method of a cost value C(p,d) will be described with reference to FIG. 10 and FIG. 11. FIG. 10 is a conceptual diagram that illustrates calculation of a shift amount according to the present embodiment. Note that FIG. 10(a) is a conceptual diagram that illustrates a reference pixel in a reference image. FIG. 10(b) is a conceptual diagram that illustrates calculation of a shift amount, namely, an amount of misalignment while shifting through candidates of the corresponding pixel with respect to the reference pixel in FIG. 10(a), in order in a comparison image. FIG. 11 is a graph that illustrates cost values with respect to shift amounts. Here, the corresponding pixel is a pixel in the comparison image that is most analogous to the reference pixel in the reference image.

As illustrated in FIG. 10(a), based on the brightness of a predetermined reference pixel p(x,y) in the reference image, and the brightness of multiple candidates q(x+d,y) of the pixel corresponding to the reference pixel p(x,y) on an epipolar line in the comparison image with respect to the reference pixel p(x,y), the cost value C(p,d) of each of the candidates q(x+d,y) of the pixel corresponding to the reference pixel p(x,y) is calculated. Here, d represents a shift amount, namely, an amount of misalignment, between the reference pixel p and a candidate q of the corresponding pixel, which is a shift amount represented by units of pixels in the present embodiment.

In the example in FIG. 10, a candidate q(x+d,y) of the pixel corresponding to the reference pixel p(x,y) is taken by shifting in a range specified in advance (for example, 0<d<25) one pixel by one pixel, to calculate the cost value C(p,d) that represents the non-similarity of the brightness values between the candidate q(x+d,y) of the corresponding pixel, and the reference pixel p(x,y).

The cost values C(p,d) calculated as described above can be represented by a graph as illustrated in FIG. 11, in which it is plotted with respect to the shift amounts d. Note that in the example in FIG. 11, the cost value C takes a value of "0" for the shift amount d=5, 12, and 19. Therefore, a unique minimum value cannot be obtained. As such, it is difficult to obtain a unique minimum value of the cost value C for an object having few textures.

<Calculation of synthesis cost value>

Next, using FIG. 12 to FIG. 14, a calculation method of a synthesis cost value Ls(p,d) will be described. FIG. 12 is a schematic view that illustrates calculation of the synthesis cost value according to the present embodiment. Calculation of the synthesis cost value in the present embodiment is executed by, for example, an SGM method, but it is not limited to that. In the present embodiment, in addition to calculating the cost value C(p,d), cost values of surrounding pixels of a predetermined reference pixel p(x,y), which are assumed as reference pixels, are calculated and aggregated into the cost value C(p,d) of the reference pixel p(x,y), to calculate the synthesis cost value Ls(p,d).

A calculation method of the synthesis cost value will be described in detail. To calculate the synthesis cost value Ls(p,d), path cost values Lr(p,d) need to be calculated first. The following formula is a formula to calculate a path cost value Lr(p,d).

$$Lr(p,d)=C(p,d)+\min\{Lr(p\text{-}r,d),Lr(p\text{-}r,d\text{-}1)+P1, \quad Lr(p\text{-}r,d+1)+P1, \quad \min_d(Lr(p\text{-}r,d))+p2\} \quad [\text{Formula 3}]$$

where r represents a directional vector in an aggregation direction that includes two components in the x direction and the y direction. min{ } denotes a function to obtain a minimum value. Lr is calculated recursively as represented by Formula 3. $\min_d(Lr(p\text{-}r,d))$ represents a minimum value of Lr(p-r,d) at coordinates where p is shifted by one pixel in the direction r when the shift amount d is changed. Also, P1 and P2 are fixed parameters defined in advance by an experiment or the like, with which the parallax values $\Delta$ of adjacent reference pixels on a path tend to be continuous.

Also, as represented by Formula 3, Lr(p,d) is obtained by adding minimum values of path cost values Lr of pixels in an r direction illustrated in FIG. 12, to the cost value C at the reference pixel p(x,y). In this way, Lr at the pixels in the r direction are obtained starting from a pixel at a far end in the r direction with respect to the reference image p(x, y), and moving along in the r direction.

For example, as illustrated in FIG. 12, Lr in eight directions are obtained, which are $Lr_0$, $Lr_{45}$, $Lr_{90}$, $Lr_{135}$, $Lr_{180}$, $Lr_{225}$, $Lr_{270}$, and $Lr_{315}$, and eventually, the synthesis cost value Ls is obtained based on the following formula.

$$Ls(p,d)=\Sigma_r\{Lr(p,d)\} \quad [\text{Formula 4}]$$

FIG. 13 is a diagram that illustrates an example in which path cost values Lr are aggregated where the paths come in the eight directions. As illustrated in FIG. 13(a), aggregation in the 0° direction is to aggregate a pixel adjacent to the reference pixel on the left, and a path cost L0 in the 0° direction is calculated by the following calculation formula.

$$L0(p,d)=C(p,d)+\min\{L0(\text{left} \quad \text{pixel},d), \quad L0(\text{left} \quad \text{pixel},d\text{-}1)+P1, \quad L0(\text{left} \quad \text{pixel},d+1)+P1, \min_d(L0(\text{left pixel, }d))+p2\} \quad [\text{Formula 5}]$$

Similarly, as illustrated in FIG. 13(b), aggregation in the 45° direction is to aggregate a pixel adjacent to the reference pixel on the upper left, and a path cost L45 in the 45° direction is calculated by the following calculation formula.

$$L45(p,d)=C(p,d)+\min\{L45(\text{upper left pixel},d), L45(\text{upper left pixel},d\text{-}1)+P1,$$
$$L45(\text{upper left pixel},d+1)+P1, \min_d(L45(\text{upper left pixel},d))+p2\} \qquad [\text{Formula 6}]$$

Similarly, as illustrated in FIG. 13(c), aggregation in the 90° direction is to aggregate a pixel adjacent to the reference pixel on the top, and a path cost L90 in the 90° direction is calculated by the following calculation formula.

$$L90(p,d)=C(p,d)+\min\{L90(top\quad pixel,d),\quad L90(pixel,d-1)+P1,\quad L90(top$$

$$pixel,d+1)+P1, \min_d(L90(top\ pixel,d))+p2\}\quad [Formula\ 7]$$

Similarly, as illustrated in FIG. 13(d), aggregation in the 135° direction is to aggregate a pixel adjacent to the reference pixel on the upper right, and a path cost L135 in the 135° direction is calculated by the following calculation formula.

$$L135(p,d)=C(p,d)+\min\{L135(upper\ right\ pixel,d),\ L135(upper\ right\ pixel,d-$$

$$1)+P1,\ L135(upper\ right\ pixel,\ d+1)+P1,\ \min_d(L135(upper\ right\ pixel,d))+p2\}\quad [Formula\ 8]$$

Similarly, as illustrated in FIG. 13(e), aggregation in the 180° direction is to aggregate a pixel adjacent to the reference pixel on the right, and a path cost L180 in the 180° direction is calculated by the following calculation formula.

$$L180(p,d)=C(p,d)+\min\{L180(right\quad pixel,d),\quad L180(right\quad pixel,d-1)+P1,$$

$$L180(right\ pixel,d+1)+P1, \min_d(L180(right\ pixel,d))+p2\}\quad [Formula\ 9]$$

Similarly, as illustrated in FIG. 13(f), aggregation in the 225° direction is to aggregate a pixel adjacent to the reference pixel on the lower right, and a path cost L225 in the 225° direction is calculated by the following calculation formula.

$$L225(p,d)=C(p,d)+\min\{L225(lower\ right\ pixel,d),\ L225(lower\ right\ pixel,d-$$

$$1)+P1,\ L225(lower\ right\ pixel,d+1)+P1,\ \min_d(L225(lower\ right\ pixel,d))+p2\}\quad [Formula\ 10]$$

Similarly, as illustrated in FIG. 13(g), aggregation in the 270° direction is to aggregate a pixel adjacent to the reference pixel on the bottom, and a path cost L270 in the 270° direction is calculated by the following calculation formula.

$$L270(p,d)=C(p,d)+\min\{L270(bottom\quad pixel,d),\quad L270(pixel,d-1)+P1,$$

$$L270(bottom\ pixel,d+1)+P1, \min_d(L270(bottom\ pixel,d))+p2\}\quad [Formula\ 11]$$

Similarly, as illustrated in FIG. 13(h), aggregation in the 315° direction is to aggregate a pixel adjacent to the reference pixel on the lower left, and a path cost L315 in the 315° direction is calculated by the following calculation formula.

$$L315(p,d)=C(p,d)+\min\{L315(lower\ left\ pixel,d),\ L315(lower\ left\ pixel,d-$$

$$1)+P1,\ L315(lower\ left\ pixel,d+1)+P1,\ \min_d(L315(lower\ left\ pixel,d))+p2\}\quad [Formula\ 12]$$

By using the path cost values in the eight directions described above, the synthesis cost value Ls(p,d) of the reference pixel is calculated.

$$Ls=L0(p,d)+L45(p,d)+L90(p,d)+L135(p,d)+L180(p,d)+L225(p,d)+L270(p,d)+L315($$

$$p,d)\quad [Formula\ 13]$$

The synthesis cost value Ls(p,d) described above can be represented by a graph with respect to shift amounts d as illustrated in FIG. 14. FIG. 14 is a graph that illustrates synthesis cost values with respect to parallax values according to the present embodiment. In the example in FIG. 14, since the synthesis cost value Ls takes the minimum value for the shift amount d=3, the parallax value Δ is calculated as Δ=3. Note that in the above description, although the number of r paths is assumed to be eight, it is not limited to that. For example, six directions or 16 directions may be considered.

The SGM method is a method of obtaining the synthesis cost value Ls(p,d) by aggregating matching cost values C(p,d) by paths, which may greatly change depending on the parallax, to obtain a highly precise parallax. Therefore, it is effective by aggregating cost values in directions where a predetermined pattern is formed.

Here, FIG. 15 is a graph that compares synthesis cost values obtained with and without a pattern. Comparing a case where a pattern is formed in a background area, for example, an area outside of an object, namely, an area that is not overlapped with the object area (an area to capture an object), with a case where the pattern is not formed in the background area, a greater contrast is obtained about the synthesis cost value Ls(p,d) in the case where the pattern is formed in the background area. Therefore, it makes it easier to determine the parallax value Δ of the pixel of interest.

If matching is executed in a state where a pattern is not formed, and there are few textures, a great contrast is not obtained about the synthesis cost value Ls(p,d) during a course of calculation by the SGM algorithm. Namely, even if a minimum value is obtained at the parallax Δ', the parallax Δ' is not reliable enough, and may be far from the correct parallax. Therefore, as illustrated in FIG. 15, a result of parallax image generation does not have a constant parallax even for the entire background, which means the precision of the result is inferior, and is not preferable.

Therefore, by forming a pattern in the background area, it is possible to precisely calculate the parallax data of pixels corresponding to an area of the part in an image. Also, by the SGM method in the present embodiment, it is possible to suppress lack of the parallax data of pixels corresponding to an area of the part in an image. Suppressing lack of the parallax data has an effect to improve recognition precision of the part information in an object recognition process.

Here, FIG. 16 is a schematic view that illustrates an object parallax and a background parallax according to the present embodiment. As illustrated in FIG. 16, in a picking system in a factory, a background parallax d1 from a stereo camera to the background area is information known in advance. Namely, since the distance Z from the stereo camera to the background area is known in advance, it is possible to calculate in advance that the background parallax d1=[base line length] x [distance between the lens and the sensor surface]/[distance Z].

Therefore, it is possible to set in advance a finite range to search for the parallax d, and to execute calculation of the cost value C within the search range of the parallax, and the SGM method. By setting in advance such a finite range to search for the parallax, erroneous detection of the parallax Δ' far from the correct parallax can be reduced, and a precise object parallax can be calculated.

As described above, a pattern formed around a position corresponding to the background area of the part 11 on the pattern unit 50, is preferably a pattern having multiple values of brightness. FIG. 17 is a diagram that illustrates positions of a pattern formed on the pattern unit 50. FIG. 17(a) illustrates an example of a reference image, and FIG. 17(b) illustrates an example of a comparison image. A pattern formed on the pattern unit 50 may be formed by using, for example, a predetermined number of pixels, a predetermined pitch, and random numbers. Note that, for example, a pattern having repeating cycles is not preferable because a specific value of the cost value C may be repeated.

For example, a pattern formed on the pattern unit 50 may be formed like a pattern B illustrated in FIG. 17, which is positioned on the left and right sides with respect to a predetermined object A, or may be formed on four, or the up, down, left, and right sides, or may be formed covering closer to the boundary between the area of the object A (the object area) and the background area. If the object A has a hollow at the center, for example, like a doughnut, the position to place the object A may be fixed, to form a pattern at a position corresponding to the hollow at the center (inside). In an image having a pattern on the pattern unit 50 and an object A captured, the object A and the pattern on the pattern unit 50 are not overlapped.

Note that the SGM method is effective for a pattern not having repeating cycles, and even more effective if the pattern is spread over the background area of an image as much as possible. Therefore, it is desirable to place a pattern that does not have repeating cycles, and includes, for example, randomly generated various spatial frequency components, up to the boundary between the object area and the background area.

Also, by using the SGM method together with the pattern formed on the outside of an object, the parallaxes of the object and the background can be calculated without generating lack of pixels for the parallaxes. Therefore, the recognition process unit can determine the boundary between the object area and the background area, based on the received parallax image. Thus, it is possible to avoid erroneous control of the arm by the arm control unit 40.

[Installation of the part]

A specific example of an application of the present embodiment will be described with reference to FIG. 18 and FIG. 19. FIG. 18 is an example of a reference image captured by the picking system 10 according to the present embodiment. In the picking system 10 illustrated in FIG. 1 described above, a reference image is set to be an image captured by the imaging unit 21 of the stereo camera 20, in which a box 11 is placed that holds black and thick threaded screws made of metal in bulk, and a random pattern is formed on an area outside of the box 11 (see FIG. 18). Note that in the example in FIG. 18, although the image size is assumed to be horizontal 1280 pixels by vertical 960 pixels, it is not limited to that.

Viewing from the imaging unit 21, the box 11 is placed, for example, so that one of the parts, or the black and thick threaded screws in bulk, is positioned at coordinates of (x,y)=(630, 450), which is positioned on the closer side. Distances are measured in advance and set so that the distance from the imaging unit 21 to the background is equal to 0.973 m, the distance from the imaging unit 21 to the edge of the box 11 is equal to 0.908 m, and the distance from the imaging unit 21 to the closest one of the black and thick threaded screws is equal to 0.928 m. The correct parallaxes to be obtained by the stereo camera 20 are, for example, the background parallax equal to 63 pixels, the parallax of the edge of the box 11 equal to 82 pixels, the parallax of the closest one of the black and thick threaded screws is equal to 76 pixels.

[Operation of stereo camera]

Next, the stereo camera 20 is operated to calculate the parallax of the black and thick threaded screws made of metal in the box 11 by, for example, the SGM algorithm. FIG. 19 is an example of a parallax image obtained by forming a pattern according to the present embodiment. Note that the range to search for the parallax d is set to, for example, 60 to 90 pixels. Consequently, the correct parallaxes are actually obtained that are the background parallax equal to 63 pixels, the parallax of the edge of the box 11 equal to 82 pixels, the parallax of the closest one of the black and thick threaded screws equal to 76 pixels (see FIG. 19). Also, as for the part parallax in the box 11, a stable result is obtained without lack of the parallax data at pixels in the part image area.

[Operation of picking system]

Next, by controlling driving the arm of the arm control unit 40, the closest one of the black and thick threaded screws can be picked by the claw part of the arm at the coordinates (x,y)=(630, 450) where the closest one of the black and thick threaded screws is positioned.

According to the present embodiment, it is possible to obtain a desired parallax and to prevent reduction of information recognition precision (for example, distance measurement precision) for an object such as a part to be picked because a parallax image is obtained based on a captured image in which a pattern is formed in advance on the background of the object, instead of projecting a pattern on an object (the part described above or the like) as done conventionally. Thus, the arm control unit 40 can correctly control picking an object by the arm. Also, according to the present embodiment, there is no need to provide an external apparatus such as a conventional pattern projection unit. Therefore, it is possible to prevent the system from being enlarged, and to reduce the manufacturing man-hour and manufacturing cost of the system.

Note that the embodiments described above are preferable embodiments of the present invention, and further, various variations and modifications may be made without departing from the scope of the present invention. For example, the processes in the information processing apparatus in the embodiments described above may be executed by using hardware, software, or a combination of these.

If the processes are to be executed by using software, it may be implemented by installing a program that has the process sequence recorded, on the memory in a computer embedded in special hardware, and by executing the program. Alternatively, the program may be installed and executed on a computer of general use that can execute various processes.

**Claims**

1. An information processing system, comprising:

   a pattern unit (50) configured to have a predetermined pattern formed by a surface treatment, or to have a function to display the pattern;
   an imaging unit (20) configured to capture an image of an object (11) and the pattern; and
   a calculation unit configured to calculate distance information between the imaging unit (20) and the object by using the image including the pattern and the object (11), obtained by the imaging unit;
   wherein the pattern unit is configured to have an object area on which the object is to be placed and a background area outside of the object area on which the pattern is formed or displayed;
   and the object (11) is not overlapped with the pattern in the image including the pattern and the object (11);
   **characterised in that** the calculation unit is configured to calculate synthesis non-similarity in which non-similarity of brightness values for each pixel in the image including the pattern and the object are calculated along a plurality of directional paths from the pixel and the directional paths are aggregated, to calculate the parallax corresponding to said every pixel at least in the image area of the object (11).

2. The information processing system, as claimed in claim 1, wherein the pattern unit (50) has the pattern printed, or has concavities and convexities on a surface, to have the pattern formed.

3. The information processing system, as claimed in any one of claims 1 to 2, wherein the pattern unit (50) displays an image corresponding to the pattern on an LCD.

4. The information processing system, as claimed in any one of claims 1 to 3, wherein the imaging unit (20) is a stereo camera.

5. The information processing system, as claimed in claim 1, wherein the calculation unit calculates the non-similarity within a range set in advance to search for the parallax.

6. An information processing method, the method comprising:

capturing an image of an object (11) on a pattern unit (50) having a predetermined pattern formed by a surface treatment, or having a function to display the pattern, the image being captured by an imaging unit (20), wherein the pattern is formed on an area outside where the object (11) is placed; and
calculating distance information by using the image including the pattern and the object (11), obtained by the capturing;
wherein the object (11) is not overlapped with the pattern in the image including the pattern and the object; and **characterised in that** the calculating calculates synthesis non-similarity in which non-similarity of brightness values for each pixel in the image including the pattern and the object are calculated along a plurality of directional paths from the pixel and the direction paths are aggregated, to calculate the parallax corresponding to said every pixel at least in the image area of the object (11).

7. The information processing method, as claimed in claim 6, wherein the capturing uses a stereo camera as the imaging unit (20).

8. The information processing method, as claimed in claim 6, wherein the calculating calculates the non-similarity within a range set in advance to search for the parallax.

**Patentansprüche**

1. Informationsverarbeitungssystem, umfassend:

eine Mustereinheit (50), die konfiguriert ist, ein vorbestimmtes Muster aufzuweisen, das durch eine Oberflächenbehandlung gebildet ist, oder eine Funktion zum Anzeigen des Musters aufzuweisen;
eine Bildgebungseinheit (20), die konfiguriert ist, ein Bild eines Objekts (11) und des Musters aufzunehmen; und
eine Berechnungseinheit, die konfiguriert ist, Abstandsinformationen zwischen der Bildgebungseinheit (20) und dem Objekt unter Verwendung des das Muster und das Objekt (11) beinhaltenden Bilds zu berechnen, das durch die Bildgebungseinheit erhalten wird;
wobei die Mustereinheit konfiguriert ist, einen Objektbereich, auf dem das Objekt platziert werden soll, und einen Hintergrundbereich außerhalb des Objektbereichs, auf dem das Muster gebildet oder angezeigt wird, aufzuweisen;
und das Objekt (11) nicht mit dem Muster in dem das Muster und das Objekt (11) beinhaltenden Bild überlappt wird;
**dadurch gekennzeichnet, dass** die Berechnungseinheit konfiguriert ist, eine Nicht-Ähnlichkeit der Synthese zu berechnen, in der eine Nicht-Ähnlichkeit von Helligkeitswerten für jedes Pixel in dem das Muster und das Objekt beinhaltenden Bild entlang einer Vielzahl von Richtungspfaden von dem Pixel berechnet werden und die Richtungspfade zusammengefasst werden, um die Parallaxe entsprechend jedem Pixel mindestens in dem Bildbereich des Objekts (11) zu berechnen.

2. Informationsverarbeitungssystem nach Anspruch 1, wobei die Mustereinheit (50) das Muster drucken lässt oder Einbuchtungen und Ausbuchtungen auf einer Oberfläche aufweist, um das Muster bilden zu lassen.

3. Informationsverarbeitungssystem nach einem der Ansprüche 1 bis 2, wobei die Mustereinheit (50) ein Bild anzeigt, das dem Muster auf einem LCD entspricht.

4. Informationsverarbeitungssystem nach einem der Ansprüche 1 bis 3, wobei die Bildgebungseinheit (20) eine Stereokamera ist.

5. Informationsverarbeitungssystem nach Anspruch 1, wobei die Berechnungseinheit die Nicht-Ähnlichkeit in einem vorher eingestellten Bereich berechnet, um nach der Parallaxe zu suchen.

6. Informationsverarbeitungsverfahren, wobei das Verfahren Folgendes umfasst:

Aufnehmen eines Bilds eines Objekts (11) auf einer Mustereinheit (50) mit einem vorbestimmten Muster, das durch eine Oberflächenbehandlung gebildet ist, oder mit einer Funktion zum Anzeigen des Musters, wobei das Bild durch eine Bildgebungseinheit (20) aufgenommen wird, wobei das Muster auf einem Bereich außerhalb gebildet ist, wo das Objekt (11) platziert ist; und
Berechnen von Abstandsinformationen unter Verwendung des das Muster und das Objekt (11) beinhaltenden Bilds, das durch das Aufnehmen erhalten wird;
wobei das Objekt (11) nicht mit dem Muster in dem das Muster und das Objekt beinhaltenden Bild überlappt wird; und
**dadurch gekennzeichnet, dass** das Berechnen eine Nicht-Ähnlichkeit der Synthese berechnet, in der eine Nicht-Ähnlichkeit von Helligkeitswerten für jedes Pixel in dem das Muster und das Objekt beinhaltenden Bild entlang einer Vielzahl von Richtungspfaden von dem Pixel berechnet werden und die Richtungspfade zusammengefasst werden, um die Parallaxe entsprechend jedem Pixel mindestens in dem Bildbereich des Objekts (11) zu berechnen.

7. Informationsverarbeitungsverfahren nach Anspruch 6, wobei das Aufnehmen eine Stereokamera als die Bildgebungseinheit (20) verwendet.

8. Informationsverarbeitungsverfahren nach Anspruch 6, wobei das Berechnen die Nicht-Ähnlichkeit in einem vorher eingestellten Bereich berechnet, um nach der Parallaxe zu suchen.

**Revendications**

1. Système de traitement d'informations comprenant :

une unité de motif (50) configurée pour avoir un motif prédéterminé formé par un traitement de surface, ou pour avoir une fonction pour afficher le motif ;
une unité d'imagerie (20) configurée pour capturer une image d'un objet (11) et du motif ; et
une unité de calcul configurée pour calculer des informations de distance entre l'unité d'imagerie (20) et l'objet en utilisant l'image comprenant le motif et l'objet (11), obtenue par l'unité d'imagerie ;
l'unité de motif étant configurée pour avoir une zone d'objet sur laquelle l'objet doit être placé et une zone d'arrière-plan à l'extérieur de la zone d'objet sur laquelle le motif est formé ou affiché ;
et l'objet (11) n'est pas chevauché avec le motif dans l'image comprenant le motif et l'objet (11) ;
**caractérisé en ce que** l'unité de calcul est configurée pour calculer une non-similarité de synthèse dans laquelle une non-similarité de valeurs de luminosité pour chaque pixel dans l'image comprenant le motif et l'objet est calculée suivant une pluralité de trajets directionnels depuis le pixel et les trajets directionnels sont agrégés, afin de calculer le parallaxe correspondant à chaque pixel au moins dans la zone d'image de l'objet (11).

2. Système de traitement d'informations tel que revendiqué dans la revendication 1, dans lequel l'unité de motif (50) a le motif imprimé, ou possède des parties concaves et des parties convexes, pour avoir le motif formé.

3. Système de traitement d'informations tel que revendiqué dans l'une quelconque des revendications 1 à 2, dans lequel l'unité de motif (50) affiche une image correspondant au motif sur un LCD.

4. Système de traitement d'informations tel que revendiqué dans l'une quelconque des revendications 1 à 3, dans lequel l'unité d'imagerie (20) est une caméra stéréo.

5. Système de traitement d'informations tel que revendiqué dans la revendication 1, dans lequel l'unité de calcul calcule la non-similarité dans une plage établie à l'avance pour rechercher la parallaxe.

6. Procédé de traitement d'informations, le procédé comprenant :

la capture d'une image d'un objet (11) sur une unité de motif (50) ayant un motif prédéterminé formé par un traitement de surface, ou ayant une fonction d'afficher le motif, l'image étant capturée par une unité d'imagerie (20), le motif étant formé sur une zone à l'extérieur de l'endroit où est placé l'objet (11) ; et
le calcul d'informations de distance en utilisant l'image comprenant le motif et l'objet (11), obtenue par la capture ;
l'objet (11) n'étant pas chevauché avec le motif dans l'image comprenant le motif et l'objet ;
**caractérisé en ce que** l'unité de calcul calcule une non-similarité de synthèse dans laquelle une non-similarité de valeurs de luminosité pour chaque pixel dans l'image comprenant le motif et l'objet est calculée suivant une pluralité de trajets directionnels depuis le pixel et les trajets de direction sont agrégés, afin de calculer le parallaxe correspondant à chaque pixel au moins dans la zone d'image de l'objet (11).

7. Procédé de traitement d'informations tel que revendiqué dans la revendication 6, dans lequel la capture utilise une caméra stéréo en tant qu'unité d'imagerie (20).

8. Procédé de traitement d'informations tel que revendiqué dans la revendication 6, dans lequel le calcul calcule la non-similarité dans une plage établie à l'avance pour rechercher la parallaxe.

# FIG.1

PICKING SYSTEM

STEREO CAMERA /20

BRIGHTNESS IMAGE

/30

RECOGNITION PROCESS UNIT

IMAGE

/23

IMAGE MATCHING UNIT

MATCHING COST VALUE

/24

PARALLAX IMAGE GENERATION UNIT

PARALLAX IMAGE

IMAGE

/21

IMAGING UNIT

IMAGING UNIT

/22

50

BOX HAVING PARTS INSIDE 11

/40

ARM CONTROL UNIT

OBJECT RECOGNITION RESULT

EP 3 001 141 B1

# FIG.2

21,22

IMAGING
UNIT

11

50

# FIG.3

21,22

IMAGING
UNIT

11

50

# FIG.4

```
                              60
                           ┌──────┐
                           │ CPU  │
                           └──────┘

    61            62              63            64
 ┌──────┐     ┌──────┐      ┌──────────┐   ┌──────────┐
 │ ROM  │◄───►│ROM I/F│◄───►│  IMAGE   │◄─►│   TWO    │
 │      │     │      │     │PROCESSING│   │ IMAGING  │
 └──────┘     └──────┘      │   UNIT   │   │  UNITS   │
                           └──────────┘   └──────────┘

    65            66              67
 ┌──────┐     ┌──────┐      ┌──────────┐
 │ RAM  │◄───►│RAM I/F│◄───►│ IMAGING- │
 │      │     │      │     │   UNIT   │
 └──────┘     └──────┘      │ CONTROL  │
                           │INTERFACE │
                           └──────────┘
```

# FIG.5

```
     21                    23               24
 ┌──────────┐          ┌────────┐       ┌──────────┐
 │ IMAGING  │  IMAGE   │        │MATCHING│PARALLAX │ PARALLAX
 │   UNIT   ├─────────►│ IMAGE  │ COST  │  IMAGE   │  IMAGE
 │(REFERENCE│          │MATCHING│ VALUE │GENERATION├──────────►
 │  IMAGE)  │          │  UNIT  ├──────►│   UNIT   │
 └──────────┘          │        │       │          │
     22                │        │       │          │
 ┌──────────┐          │        │       │          │
 │ IMAGING  │  IMAGE   │        │       │          │
 │   UNIT   ├─────────►│        │       │          │
 │(COMPARISON          │        │       │          │
 │  IMAGE)  │          │        │       │          │
 └──────────┘          └────────┘       └──────────┘
```

# FIG.6

IMAGE MATCHING UNIT ~23

REFERENCE IMAGE → HIGH-RANGE EMPHASIZING FILTER UNIT ~71

COMPARISON IMAGE → HIGH-RANGE EMPHASIZING FILTER UNIT ~72

COST CALCU-LATION UNIT ~73

PARALLAX IMAGE GENERATION UNIT ~24

$C(p,d-2)$
$C(p,d-1)$
$C(p,d)$
$C(p,d+1)$
$C(p,d+2)$

SYNTHESIS COST CALCU-LATION UNIT ~81

$Ls(p,d-2)$
$Ls(p,d-1)$
$Ls(p,d)$
$Ls(p,d+1)$
$Ls(p,d+2)$

INTEGER PARALLAX CALCU-LATION UNIT ~82

$\Delta(p)$
$Ls(p,\Delta-2)$
$Ls(p,\Delta-1)$
$Ls(p,\Delta)$
$Ls(p,\Delta+1)$
$Ls(p,\Delta+2)$

DECIMAL PARALLAX CALCU-LATION UNIT ~83

$\delta(p)$ → PARALLAX IMAGE

EP 3 001 141 B1

# FIG.7

SYNTHESIS
COST VALUE Ls

d(@ PIXEL OF
INTEREST)

$\cdots \Delta-3 \; \Delta-2 \; \Delta-1 \; \Delta \; \Delta+1 \; \Delta+2 \; \Delta+3 \cdots$

DECIMAL PARALLAX $\delta$
AFTER SUBPIXEL ESTIMATION

# FIG.8

20

| IMAGING UNIT (REFERENCE IMAGE) 21 | IMAGE | PREPROCESS UNIT (REFERENCE IMAGE) 91 | IMAGE | | | |
|---|---|---|---|---|---|---|
| IMAGING UNIT (COMPARISON IMAGE) 22 | IMAGE | PREPROCESS UNIT (COMPARISON IMAGE) 92 | IMAGE | IMAGE MATCH-ING UNIT 23 | MATCH-ING COST VALUE | PARALLAX IMAGE GENERA-TION UNIT 24 |

PARALLAX IMAGE

# FIG.9

## FIG.10

p(x,y)

q(x+d,y)

d

(a)

(b)

## FIG.11

COST VALUE C

100
80
60
40
20
0

0    5    10    15    20    25

SHIFT AMOUNT d

EP 3 001 141 B1

# FIG.12

# FIG.13

(a) 0° DIRECTION

L0(p-r,d) | L0(p,d)
IS OBTAINED

(b) 45° DIRECTION

L45(p-r,d)

L45(p,d)
IS OBTAINED

(c) 90° DIRECTION

L90(p-r,d)

L90(p,d)
IS OBTAINED

(d) 135° DIRECTION

L135(p-r,d)

L135(p,d)
IS OBTAINED

(e) 180° DIRECTION

L180(p,d) | L180(p-r,d)
IS OBTAINED

(f) 225° DIRECTION

L225(p,d)
IS OBTAINED

L225(p-r,d)

(g) 270° DIRECTION

L270(p,d)
IS OBTAINED

L270(p-r,d)

(h) 315° DIRECTION

L315(p,d)
IS OBTAINED

L315(p-r,d)

EP 3 001 141 B1

EP 3 001 141 B1

FIG.14

SYNTHESIS COST VALUE
Ls

FIG.15

SYNTHESIS COST VALUE
Ls(p,d)

IF PATTERN IS FORMED

IF PATTERN IS NOT FORMED

PARALLAX Δ     PARALLAX Δ'

d(@ PIXEL OF INTEREST)

# FIG.16

REFERENCE IMAGE

OBJECT AREA

$d1 < d2$

PARALLAX IN
OBJECT AREA d2

PARALLAX IN
BACKGROUND AREA d1

COMPARISON
IMAGE

OBJECT AREA

# FIG.17

(a) REFERENCE
IMAGE

B        A        B

(b) COMPARISON
IMAGE

B        A        B

# FIG.18

REFERENCE
IMAGE

# FIG.19

PARALLAX
IMAGE

# FIG.20

# FIG.21

REFERENCE
IMAGE

REFLECTED LIGHT FROM
PATTERN PROJECTION UNIT

# FIG.22

PARALLAX
IMAGE

ADVERSE EFFECT BY
REFLECTED LIGHT ON
PARALLAX CALCULATION
RESULT

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013190394 A
- US 20040155877 A1
- US 20080075324 A1